# EUROPÄISCHE PATENTSCHRIFT

(11) **EP 0 610 740 B1**
(45) Veröffentlichungstag und Bekanntmachung des Hinweises auf die Patenterteilung: **05.03.1997**
(21) Anmeldenummer: 94101247.8
(22) Anmeldetag: 28.01.1994
(51) Int. Cl.: C05D 5/00, C01F 5/40, B01J 2/28

(54) **Verfahren zum Granulieren von Kieserit**
Kieserite granulating process
Procédé de granulation de kiesérite

(30) Priorität: 11.02.1993 DE 4303984
(43) Veröffentlichungstag der Anmeldung: 17.08.1994
(73) Patentinhaber: KALI UND SALZ BETEILIGUNGS AKTIENGESELLSCHAFT, D-34119 Kassel (DE)
(72) Erfinder: Löblich, Karl-Richard, Dr., D-30890 Barsinghausen 1 (DE); Schröder, Michael, D-31319 Sehnde (DE); Schrumpf, Frank, Dr., D-36037 Fulda (DE); Werthmann, Rainer, Dr., D-34128 Kassel (DE)

(56) Entgegenhaltungen:
- EP-A- 0 281 953
- DE-A- 3 148 404
- DE-C- 3 618 058
- DATABASE WPI Section Ch, Week 7706, Derwent Publications Ltd., London, GB; Class E06, AN 77-10208Y SAKAI KAGAKU KOGYO 'Granulation of flux powder for casting steels' & JP-A-51 149 828

## Beschreibung

Kieserit ist als Magnesiumsulfat-monohydrat wegen seiner Wasserlöslichkeit ein besonders schnell wirkender Magnesiumdünger, der anderen Magnesiumträgern auf Böden mit einem pH über 7 deutlich überlegen ist. Auf sulfatarmen Böden ist sein Schwefelgehalt von zusätzlicher Bedeutung.
Moderne Düngetechniken erfordern granulierte Dünger mit einem Kornspektrum von 2 bis 4 mm mit einem Hauptanteil von 2,5 bis 3,5 mm. Da die Granalien auf ihrem Weg von der Herstellung bis zum Acker mehrfacher mechanischer Beanspruchung ausgesetzt sind, wird eine hohe mechanische Festigkeit verlangt.

Zur Überführung des bei der Gewinnung zu feinkörnig anfallenden Kieserits in eine marktgerechte granulierte Form sind bereits mehrere Verfahren vorgeschlagen worden. Diese gliedern sich in zwei Gruppen: Einmal die Vorschläge zur Preßgranulierung von Kieserit, und zum anderen Vorschläge zur Rollgranulierung. Die beiden Gruppen unterscheiden sich grundsätzlich. Deshalb wirkt ein Hilfsmittel, das die Form und die Stabilität der Granalien, welche nach einem Verfahren der einen Gruppe hergestellt werden, nicht zwangsläufig auch bei der Granulierung nach einem Verfahren der anderen Gruppe verbessernd.

Bei der Preßgranulierung wird das Granuliergut zwischen gegenläufig rotierenden Walzen verdichtet, die mit hohem Druck gegeneinandergeschoben werden. Dieses Verfahren bewährt sich bei der Granulierung von Alkalichloriden. Die Kristallgitterebenen dieser Verbindungen weisen eine Verschiebbarkeit auf, die eine Druckplastizität zur Folge hat.

Dadurch fließen die Primärteilchen beim Pressen zu einer kompakten Masse, der brettartigen Schülpe, zusammen. Diese wird einer Brech-Sieb-Vorrichtung zur Gewinnung der Granalien mit gewünschter Korngröße zugeführt. Beim Kieserit ist diese Verschiebbarkeit der Gitterebene in den Kristallbruchstücken der Primärteilchen nicht gegeben.
Deshalb zerplatzen die Primärteilchen beim Pressen in der Walzenpresse. Es entstehen zwar hoch verdichtete Schülpen, die jedoch sehr leicht zu Staub zerfallen.

Den Zerfall der Kieseritschülpen zu Staub zu verhindern, hat der Vorschlag der DE-PS 31 48 404 zum Gegenstand. Danach wird der Kieserit vor der Aufgabe auf die Walzenpresse mit einer Lösung befeuchtet, welche Salze des Kaliums und/oder des Natriums mit den Anionen Sulfat, Carbonat, Silikat, Phosphat, Hydrogenphosphat oder Tetraborat enthalten. Das aus den Schülpen gewinnbare Granulat befriedigte jedoch nicht vollkommen. Deshalb wurde Rollverfahren in der Folgezeit der Vorzug gegeben.

Bei den Rollverfahren erfolgt die erste Verdichtung der Granuliermasse im wesentlichen nicht durch äußeren Druck, sondern durch Kapillarkräfte, welche die zwischen die Primärteilchen ziehende Granulierflüssigkeit auf diese ausübt. Die rollende Bewegung der Masse in einer rotierenden Trommel bzw. auf einem schräg gestellten rotierenden Teller bewirkt sekundär Druck- und Scherkräfte, welche die sich verdichtende Masse zerteilen und zu mehr oder weniger kugelförmigen Granalien, den Grünpellets, ausformen.

Für die Granulierung in der Rolltrommel wird das Granuliergut vor dem Rollen in einem Mischer mit der Granulierflüssigkeit vorbefeuchtet. Dagegen wird bei der sogenannten Aufbaugranulierung auf dem Granulierteller das Gut kontinuierlich trocken aufgegeben und während des Rollens besprüht.
Bei diesem Verfahren wirken die Kapillar- und die mechanischen Kräfte bei der Ausformung der Grünpellets simultan. Da der schräggestellte Granulierteller einen erhöhten Rand aufweist, kommt es im unteren Tellerbereich zur Ausbildung eines bewegten Granulatbettes, in welchem die größeren Grünpellets aufschwimmen und so am ehesten die Chance haben, über den Tellerrand hinweg ausgetragen zu werden.
Deshalb hat das Tellergranulat ein engeres Kornspektrum als das Trommelgranulat.

Die Grünpellets haben einen so hohen Gehalt an Feuchte, daß sie nicht ohne die Gefahr des Zusammenwachsens lagerbar sind. Der Kieserit lagert langsam das zunächst freie Wasser unter Bildung höherer Hydrate des Magnesiumsulfates an. Diese höheren Hydrate tragen zur Kornverfestigung bei.
Damit die Hydratkristalle jedoch nicht kornübergreifend wachsen können, muß die Wassermenge in den Grünpellets durch partielle Trocknung begrenzt werden. Diese Trocknung stellt jedoch eine mechanische und thermische Beanspruchung der Granalien dar. Es muß also eine ausreichende mechanische Festigkeit der Grünpellets beim Eintritt in den Trockner gegeben sein.

Die Festigkeit der Grünpellets wird nicht nur durch die Kapillarkräfte bewirkt, die entscheidend zu ihrem Aufbau beigetragen haben, sondern auch durch die schon bei der Befeuchtung einsetzende Hydratation des Kieserits.

Da beim Rollverfahren in der Trommel der Kieserit schon vor der Formgebung angefeuchtet wird, würde ein Teil der Verfestigungswirkung durch eine zu schnelle Hydratation verloren gehen.
Deshalb wird in der DE-PS 36 18 058 vorgeschlagen, der Kieseritmischung lösliche und/oder leicht kolloid lösliche Substanzen aus der Klasse der Mono-, Di- und Polysaccharide und/oder deren einfachen hydrophilen Derivaten zuzusetzen. Dieser Vorschlag hat sich bei der Trommelgranulierung mit Vorbefeuchtung bewährt, nicht hingegen bei der Aufbaugranulierung auf dem Granulierteller.

Ähnliches gilt für den Vorschlag der DE-PS 37 07 785, in der wäßrige Phosphatlösungen der Kieseritmischung zugesetzt werden. Allerdings ist die Lagerbarkeit der Produkte, die nach den beiden zuletzt genannten Vorschlägen hergestellt werden, bei Luftfeuchten über 60 % nicht voll befriedigend.

In der DE-PS 27 48 152 wird vorgeschlagen, dem Kieserit 1 bis 10 % Ammoniumsulfat als Granulierhilfsmittel zuzugeben. Man entnimmt der Beschreibung, daß erst ab 2 % Ammoniumsulfat im Granulat eine deutliche Wirkung auf die Abriebfestigkeit erkennbar ist. Das Produkt würde bei Ammoniumsulfatgehalten oberhalb 1 % einen Stickstoffgehalt aufweisen, der ein Ausbringen dieses Magnesiumdüngers im Herbst und Winter verbieten würde. Unterhalb 1 % Zusatzmenge ist jedoch das Ammoniumsulfat in einem Verfahren nach DE-PS 27 48 152 wirkungslos.

Deshalb stellt sich die Aufgabe, nach Granulierhilfsmitteln zu suchen, die schon in geringer Dosierung wirksam sind. Von besonderem Vorteil wären solche, die in allen Rollverfahren einsetzbar sind.

Da Borax gemäß DE-PS 31 48 404 eine gewisse Wirkung bei der Preßgranulierung von Kieserit gezeigt hatte, wurde dieser Hilfsstoff auch versuchsweise in der Rollgranulierung eingesetzt. Dabei zeigte sich, daß eine gewisse kornverfestigende Wirkung aber erst bei Zusätzen über 2 % einsetzte. Ein so hoher Boraxzusatz ergibt einen Borgehalt über 0,2 % im Produkt, so daß dieses nicht mehr bedenkenlos zur Düngung borempfindlicher Pflanzen verwendet werden kann. Für eine breite Anwendung muß der Borgehalt unter 0,1 % sein.

Überraschenderweise steigt die kornfestigende Wirkung des Borax an, wenn man dem Kieserit auch noch einen Zucker, z.B. Saccharose, zusetzt. Dennoch gelingt es nicht, den Boraxzusatz deutlicher unter 2 % zu senken, um noch eine ausreichende Kornfeste zu erreichen. Fügt man jedoch eine deutlich unter 1 % liegende Menge Ammoniumsulfat hinzu, wird es möglich, auch den Boraxzusatz sogar deutlich unter 1 % herabzusetzen und dabei eine beträchtliche Kornverfestigung zu erzielen. Diese überraschenden synergistischen Effekte machen das Wesen der Erfindung aus.

Bei der weiteren Ausarbeitung des erfindungsgemäßen Granulierverfahrens für Kieserit wurde eine Steigerung der Abriebfeste der Granalien erreicht, wenn die Dosierung der Hilfsstoffe so gewählt wurde, daß das Produkt 0,2 bis 0,7 % eines Mono- oder Disaccharids, 0,5 bis 0,9 % Ammoniumsulfat, -chlorid, -dihydrogenphosphat oder -hydrogenphosphat und 0,25 bis 0,45 % wasserfrei gerechnetes Dinatriumtetraborat enthält.

Das Verfahren der Erfindung hat sich als anwendbar sowohl bei der Trommelgranulierung mit Vorbefeuchtung als auch bei der Aufbaugranulierung auf dem Granulierteller erwiesen. Wenn die Vorbefeuchtung angewendet wird, können alle Komponenten sowohl in fester als auch gelöster Form der Kieseritmischung zugesetzt werden. Bei der Aufbaugranulierung ist die trockene Zugabe wegen der kurzen Einwirkzeit der aufgesprühten Granulierflüssigkeit nur dann möglich, wenn die Hilfsstoffe staubfein vorliegen.

Die zu granulierende Kieseritmischung besteht aus Kieserit-Frischgut und aus Rückgut. Die Frischgutzufuhr pro Zeiteinheit in die Granuliervorrichtung entspricht der Gutkornausfuhr. Die Rückgutzufuhr entspricht der pro Zeiteinheit anfallenden Fehlkornmenge. Das Kieserit-Frischgut ist eine Mischung von groberem Kieserit einer mittleren Korngröße von 0,3 bis 0,4 mm und staubfein gemahlenem Kieserit einer mittleren Korngröße von 0,02 bis 0,04 mm. Die Hilfsstoffzugabemenge zur Gesamtmischung aus Frisch- und Rückgut wird stets auf die Frischgutmenge bezogen. Dadurch wird sichergestelllt, daß die gewünschten Hilfsstoffgehalte im Produkt auch bei betriebsbedingten Schwankungen des Frischgut/Rückgutverhältnisses weder unter- noch überschritten werden. Die Befeuchtung der Kieseritmischung erfolgt beim Trommelverfahren vor der Granulierung, bei der Aufbaugranulierung erst während des Granulierens.

Das Verfahren der Erfindung ermöglicht überraschend gegenüber den anderen beschriebenen Verfahren eine kräftige Absenkung der nach dem Trocknen der Granalien zur Nachhärtung durch Ausreifen erforderlichen Restfeuchte.

Diese beträgt bei der bis jetzt angewendeten Aufbaugranulierung für Kieserit 3 bis 4 % und bei dem Produktionsverfahren, das gemäß DE-PS 36 18 058 durchgeführt wird, 1,8 bis 2,5 %.
Bei dem erfindungsgemäßen Verfahren wird die Restfeuchte durch Trocknen auf 0,5 bis 2,0 % eingestellt.

Die Restfeuchte stellt das für die Nachhärtung durch die Bildung höherer Magnesiumsulfathydrate erforderliche Wasser zur Verfügung. Die Endhärte des Kieseritgranulats stellt sich erst nach mehrtägiger Lagerung ein. Erst danach ist das Granulat bisher ein verkaufsfähiges Produkt. Dies bedeutet aber, daß die auf Restfeuchte getrockneten Granalien um so weicher sind, je höher die Restfeuchte sein muß, um auf eine ausreichende Endhärte zu kommen.

Bei dem erfindungsgemäßen Verfahren ergibt die hierbei mögliche schärfere Durchtrocknung auf 0,7 bis 1,5 % Restfeuchte ein Granulat, dessen Festigkeit schon beim Verlassen des Trockners nicht allzu weit vom Wert der Endfestigkeit entfernt liegt. Dies bedingt, daß die Festigkeit beim Trocknungsprozeß schnell ansteigt, so daß die Kornzerstörung beim Trocknen und beim anschließenden Aussieben der verkaufsfähigen Kornfraktion (Gutkorn) gegenüber den bisher ausgeübten Verfahren deutlicher zurückgeht, also weniger zurückzuführendes Fehlkorn anfällt.

Im Verfahren der Erfindung können als Zuckerkomponente Glukose, Fructose, Saccharose, Lactose, aber auch Pentosen in reiner Form oder als Abfallprodukte eingesetzt werden.

Hinsichtlich des Aufbaus der Grünpellets bei der Aufbaugranulierung hat sich Melasse als Zuckerträger bewährt. Diese hat auch einen günstigen Einfluß auf den Flüssigkeitsbedarf beim Granulieren. Die verringerte Grünfeuchte verringert die Trocknungskosten. Das Dinatriumtetraborat wird sowohl wasserfrei als auch als Dekahydrat = Borax eingesetzt.
Allerdings vermindert Melasse die Lagerstabilität der Kieseritgranalien beim Lagern bei einer relativen Luftfeuchte über 60 %. Dem kann erfindungsgemäß durch einen Zusatz von feinteiliger Stärke entgegengewirkt werden.

Die Melassedosierung wird in den Grenzen 0,5 bis 1,5 % und die der Stärke zwischen 0,2 bis 0,5 %, bezogen auf das Frischgut, gewählt. Die Beschreibung wird durch folgende Tabellen ergänzt.

Tabelle 1 gibt den Stand der Technik wieder.
Darin bedeutet T1 Verfahren gemäß DE-PS 36 18 058, T2 Aufbaugranulierung.

Tabelle 2 stellt Beispiele für die Durchführung des erfindungsgemäßen Verfahrens vor. Die Qualitätskennzahlen wurden an einer ausgesiebten Kornfraktion von 2,0 bis 2,5 mm bestimmt.

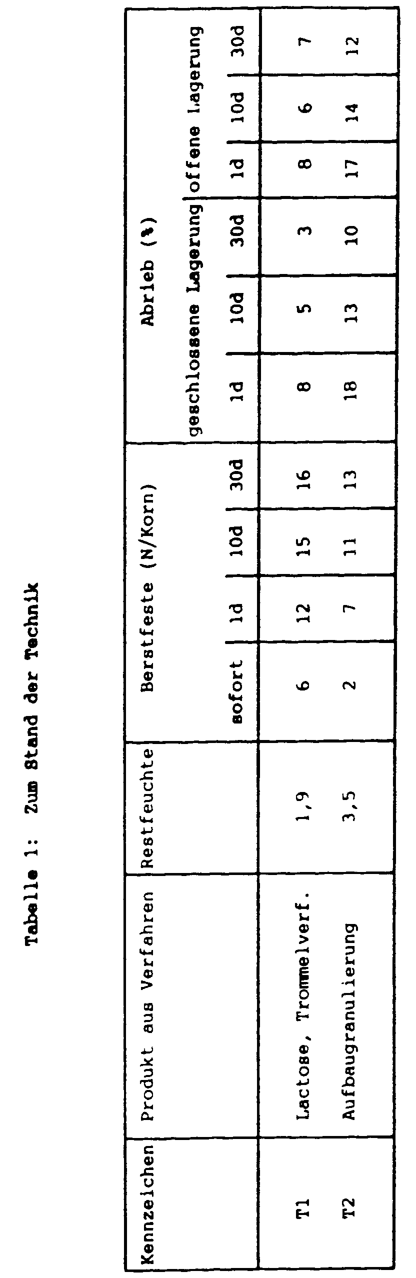

**Tabelle 2**

| Zum vorgeschlagenen Verfahren | |
|---|---|
| E 1 | 0,6 % Ammonsulfat; 0,5 % Borax; 0,2 % Glukose Hilfestoffe fest zugeben; dann Mischungvorfeuchtung |
| E 2 | 0,8 % Ammonsulfat; 0,6 % Borax; 0,7 % Saccharose |
| E 3 | 0,5 % Ammonsulfat: 0,6 % Borax; 0,4 % Lactose |
| E 4 | 0,5 % Ammondihydrogenphosphat; 0,5 % Borax; 0,4 % Lactose |
| E 5 | 0,8 % Ammonsulfat; 0,7 % Borax; 1,5 % Melasse Hilfestoffe als Lösung in der Aufbaugranulierung |
| E 6 | 0,8 % Ammonsulfat; 0,7 % Borax; 1,5 % Melasse; 0,5 % Weizenstärke |
| E 7 | 0,8 % Ammonsulfat; 0,7 % Borax; 0,7 % Melasse; 0,3 % Weizenstärke |

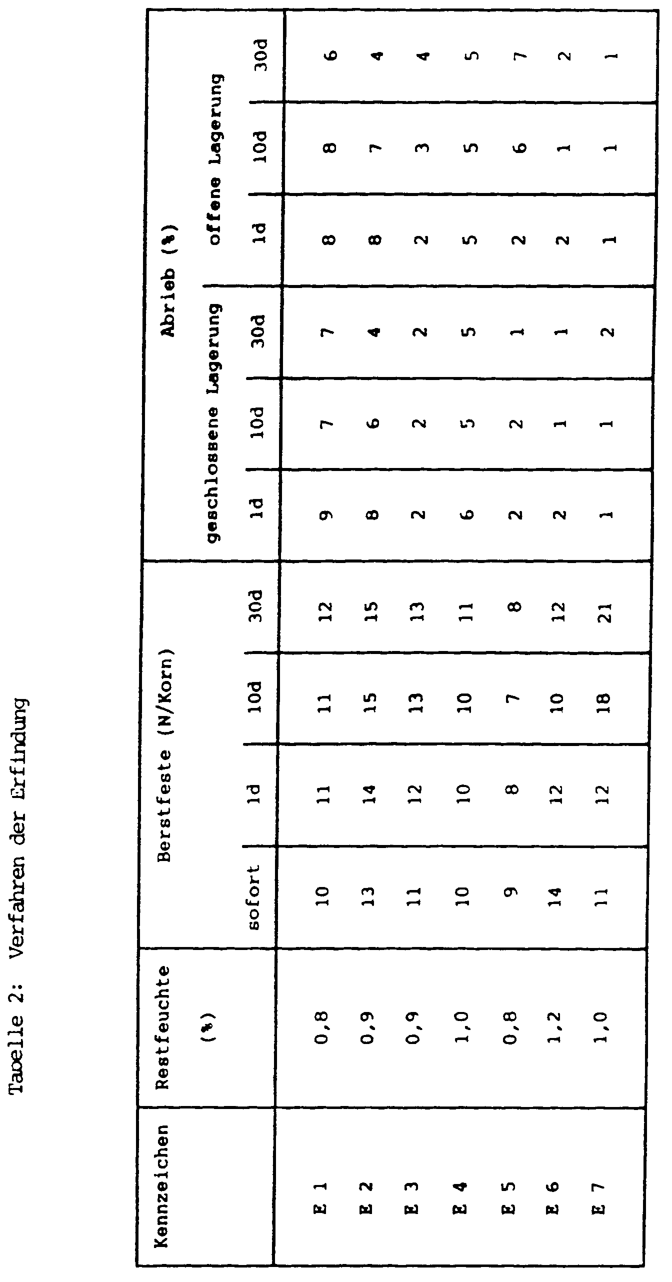

## Patentansprüche

1. Verfahren zum Granulieren von Kieserit durch Rollen einer vorbefeuchteten oder beim Aufbau der Pellets befeuchteten Mischung aus Kieserit mit einer mittleren Korngröße von 0,3 bis 0,4 mm, aus staubfein gemahlenem Kieserit mit einer mittleren Korngröße von 0,02 bis 0,04 mm und aus dem aus Fehlkorn der Granulierung gewonnenem Rückgut auf dem Granulierteller oder in der Granuliertrommel unter Zusatz von Wasser und Granulierungshilfsmitteln, wie Sacchariden und Polysacchariden, und anorganischen Verbindungen aus der Gruppe Ammoniumsalze und Phosphate, Trocknen der Grünpellets bis zur erforderlichen Restfeuchte, Aussieben und Ausführen der verkaufsfähigen Kornfraktion als Produkt und Rückführen des Fehlkorns, gegebenenfalls nach Mahlung, als Rückgut**, dadurch gekennzeichnet,** daß dem Aufgabegut in die Rollvorrichtung, bezogen auf die Frischgutmenge, 0,2 bis 0,7 % eines Mono- oder Disaccharids, 0,5 bis 0,9 % Ammoniumsulfat, -chlorid, -dihydrogenphosphat oder -hydrogenphosphat und 0,25 bis 0,45 % wasserfrei gerechnetes Dinatriumtetraborat gelöst zusammen mit der Granulierflüssigkeit oder vor der Zugabe der Granulierflüssigkeit in feinteiliger Form trocken zugegeben wird und die ausgeformten Grünpellets auf eine Restfeuchte von 0,5 bis 2,0 % getrocknet werden.

2. Verfahren nach Anspruch 1, **dadurch gekennzeichnet**, daß das Tetraborat in Form seines Dekahydrates Borax in einer Dosierung von 0,5 bis 0,8 %, bezogen auf die Frischgutmenge, eingesetzt wird und die Grünpellets auf eine Restfeuchte von 0,7 bis 1,5 % getrocknet werden.

3. Verfahren nach Anspruch 1, **dadurch gekennzeichnet**, daß das Disaccharid in Form von Melasse mit 40 bis 50 % Zuckergehalt zusammen mit 0,2 bis 0,5% Stärke, bezogen auf das Frischgut, eingesetzt wird.

## Claims

1. A method of granulating kieserite by rolling a mixture which is pre-wetted or wetted in the operation of building up the pellets, comprising kieserite with a mean grain size of 0.3 to 0.4 mm, kieserite which is ground to dust-fine size with a mean grain size of 0.02 to 0.04 mm and the return material obtained from defective grain of the granulation operation on the granulating plate or in the granulating drum with the addition of water and granulating additives such as saccharides and polysaccharides, and inorganic compounds from the group comprising ammonium salts and phosphates, drying of the green pellets to the required residual moisture content, sieving and discharging the saleable grain fraction as a product and returning the defective grain, possibly after crushing, as return material, characterised in that with respect to the amount of fresh material 0.2 to 0.7% of a mono- or disaccharide, 0.5 to 0.9% ammonium sulphate, chloride, dihydrogen phosphate or hydrogen phosphate and 0.25 to 0.45% disodiumtetraborate, calculated water-free, in a dissolved condition together with the granulating liquid or prior to the addition of the granulating liquid in finely divided form in a dry condition is added to the feed material into the rolling apparatus, and the shaped green pellets are dried to a residual moisture content of 0.5 to 2.0%.

2. A method according to claim 1 characterised in that the tetraborate is used in the form of its decahydrate borax in a metered amount of 0.5 to 0.8% with respect to the amount of fresh material, and the green pellets are dried to a residual moisture content of 0.7 to 1.5%.

3. A method according to claim 1 characterised in that the disaccharide is used in the form of molasses with a 40 to 50% sugar content together with 0.2 to 0.5% starch, with respect to the fresh material.

## Revendications

1. Procédé de granulation de kiesérite, en faisant rouler un mélange, humidifié au préalable ou humidifié lors de la formation des boulettes, de kiesérite ayant une granulométrie moyenne de 0,3 à 0,4 mm, de kiesérite broyée à la finesse de la poussière d'une granulométrie moyenne de 0,02 à 0,04 mm et de produit recyclé provenant du grain défectueux de la granulation sur le plateau de granulation ou dans un tambour de granulation, en ajoutant de l'eau et des adjuvants de granulation comme des saccharides et des polysaccharides et des composés minéraux du groupe des sels d'ammonium et des phosphates, en séchant les boulettes à vert jusqu'à l'humidité résiduelle nécessaire, en tamisant et en sortant la fraction granulométrique marchande en tant que produit et en recyclant le grain défectueux, le cas échéant après broyage, en tant que produit recyclé, **caractérisé en ce qu'**il consiste à ajouter au produit chargé dans le dispositif où s'effectue le roulage, rapporté à la quantité de produit frais, de 0,2 à 0,7 % d'un monosaccharide ou dissacccharide de 0,5 à 0,9% d'un sulfate d'ammonium, d'un chlorure d'ammonium, d'un dihydrogénophosphate d'ammonium ou d'un hydrogénophosphaste d'ammonium et de 0,25 à 0,45% de tétraborate disodique exprimé en matière anhydre dissout conjointement au liquide de granulation ou sous forme sèche finement divisée avant l'addition du liquide de granulation et à sécher les boulettes à vert formées jusqu'à une humidité résiduelle de 0,5 à 2,0%

2. Procédé suivant la revendication 1, **caractérisé en ce qu'**il consiste à utiliser le tétraborate sous la forme de son borax décahydraté en une dose de 0,5 à 0,8%, rapportée à la quantité de produit frais, et à sécher les boulettes à vert jusqu'à une humidité résiduelle de 0,7 à 1,5%.

3. Procédé suivant la revendication 1, **caractérisé en ce qu'**il consiste à utiliser le dissaccharide sous la forme de mélasse ayant une teneur en sucre de 40 à 50 % conjointement avec 0,2 à 0,5% d'amidon, rapporté au produit frais.
